# EUROPEAN PATENT APPLICATION

(11) **EP 2 437 208 A1**
(43) Date of publication of application: **04.04.2012**
(21) Application number: 10306071.1
(22) Date of filing: 01.10.2010
(51) Int. Cl.: G06Q 10/00

(54) **A method for accessing a service and a corresponding system**

(71) Applicant: Gemalto SA, 92190 Meudon (FR)
(72) Inventor: Faher, Mourad, 78160 MARLY LE ROI (FR); Rouchouze, Bruno, 83270 ST CYR SUR MER (FR); Plessis, Patrice, 13780 CUGES LES PINS (FR)

(57) **Abstract**

The invention relates to a method for accessing a service.

According to the invention, a first communicating device (12) storing at least one form to be completed, the method comprises the following steps. The first communicating device sends, via a short-range radio-frequency link (15), the form to be completed to a terminal (16). The terminal completes at least in part the form to be completed. The terminal sends the completed form to a second communicating device (110). The second communicating device or another communicating device (120) connected to the second communicating device analyses whether the completed form does or does not allow accessing a service.

The invention also relates to a corresponding system (10).

## Description

### Field of the invention:

The invention relates, in a general manner, to a method for accessing a service. Furthermore, the invention also pertains to a system for accessing a service.

### State of the art:

A known solution for accessing a service, such as a stay in a room within a hotel, is based upon a use of a paper form to be manually completed by a user.

However, such a known solution implies that a user has to use, in a repeated manner, the same input information, each time she or he desires to access the service or another service.

Thus, there is a need to facilitate an access to a service.

### Summary of the invention:

The invention proposes a solution for satisfying the just hereinabove specified need by providing a method for accessing a service.

According to the invention, a first communicating device storing at least one form to be completed, the method comprises the following steps. The first communicating device sends, via a short-range radio-frequency link, the form to be completed to a terminal. The terminal completes at least in part the form to be completed. The terminal sends the completed form to a second communicating device. The second communicating device or another communicating device connected to the second communicating device analyses whether the completed form does or does not allow accessing a service.

The principle of the invention consists in using a terminal for fetching, through a short range radio-frequency link, from an external entity that supplies a form relating to a service desired to be accessed, and automatically filling it out before providing it to an external entity.

Thus, the invention solution makes it possible to automatically fill out at least in part a form to be filled out without involving a terminal user.

Accordingly, contrary to the known solution that is described supra, the proposed solution does not require a user intervention, so as to access a service supplied at a location where the first communicating device is situated.

It is to be noted that the service may relate to any kind of service or application, such as a hotel service, a hospital service, a transport service, a wallet service, a bank service, or the like, as a service supplied by a service provider.

The use of the terminal allows, on the one hand, retrieving directly, from a first communicating device, a form related to a service to be accessed, and on the other hand, writing, in an automatic manner, the needed information into the service form.

A terminal user may use the invention process at a location where the first communicating device is situated and at any time, so as to access, in a direct, easy, simple and quick manner, the concerned service.

The invention solution thus facilitates an access to a service and is therefore convenient and user-friendly.

According to a further aspect, the invention is a system for accessing a service.

According to the invention, the system comprises a first communication device, a terminal and at least a second communicating device. The first communicating device comprises means for storing at least one form to be completed, and means for sending, via a short-range radio-frequency link, the form to be completed to a terminal. The terminal comprises means for completing at least in part the form to be completed, and means for sending the completed form to a second communicating device. The second communicating device or another communicating device connected to the second communicating device comprises means for analysing whether the completed form does or does not allow accessing a service.

### Brief description of the drawings:

Additional features and advantages of the invention will be more clearly understandable after reading a detailed description of one preferred embodiment of the invention, given as one indicative and non-limitative example, in conjunction with the following drawings:

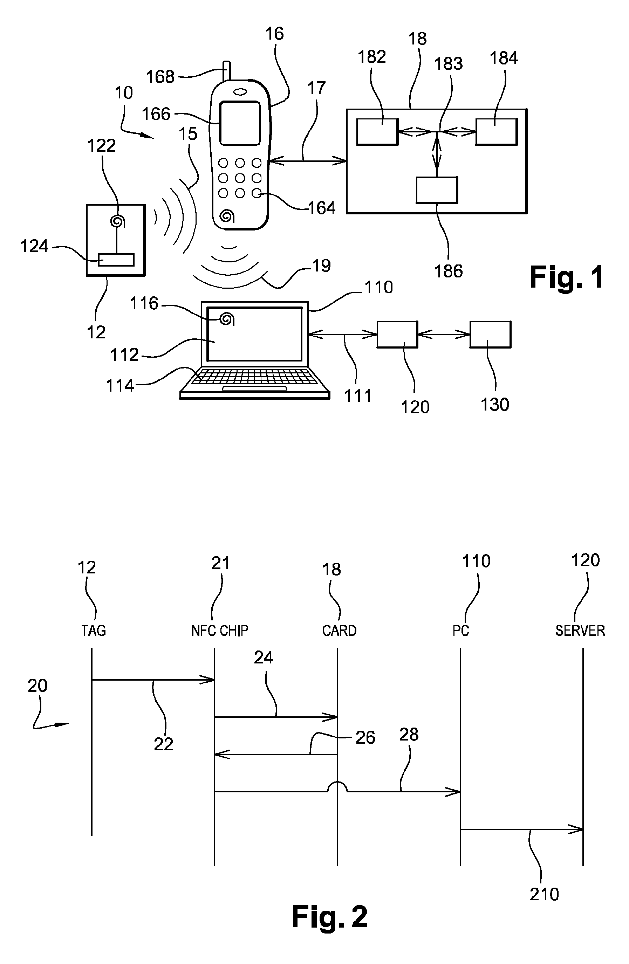

- Figure 1 represents a simplified diagram of one exemplary embodiment of a system for accessing a service, the system comprising a Radio Frequency IDentification (or RFID) object, an Near Field Communication (or NFC) enabled mobile telephone, as a user terminal, a smart card coupled to the terminal, and an NFC reader connected to a server, the system being adapted to write automatically data into a form supplied by the RFID object and send the thus completed form to the server, according to the invention; and
- Figure 2 illustrates a simplified message flow of one exemplary embodiment of a method implemented notably by the different entities of the system of figure 1, so that the terminal user accesses a service managed by the server.

### Detailed description:

Herein under is considered a case in which the invention method for accessing a service is implemented by, among others, a smart card, as a token, in cooperation with an NFC enabled terminal and an NFC chip connected to an antenna under a token control.

However, the invention method for accessing a service may be implemented by an NFC enabled terminal and an NFC chip connected to an antenna under a terminal control. In other words, the NFC enabled terminal does not cooperate with any smart card, so as to access a service. According to such an embodiment (not represented), the NFC enabled terminal is adapted, so as to exert, in cooperation with the NFC chip, the functions carried out by the token and the terminal and that are hereinafter described.

Figure 1 shows one embodiment of an electronic system 10 for accessing a service.

The system 10 for accessing a service includes an RFID object, also termed RFID tag 12, an NFC enabled mobile telephone 16, a Universal Integrated Circuit Card (or UICC) type smart card 18, a Personal Computer (or PC) 110 and a server 120.

For the sake of clarity and conciseness, the RFID tag 12, the NFC mobile telephone 16 and the UICC type smart card 18 are termed hereinafter the tag 12, the phone 16 and the card 18 respectively.

The tag 12, as first and contact-less communicating device, is stuck or fixed at a registration desk (not represented) or any other physical element (not represented), as a service delivery point.

Within the present description, the adjective "contact-less" used within the expression "contact-less communicating device" means notably that the device communicates via a short range radio-frequency link by using, for example, International Organization for Standardization/ International Electrotechnical Commission (or ISO/IEC) 14 443 specifications or the like.

The tag 12 is thus associated with a physical element (not represented) that is present at a geographical location from which a service may be requested.

The service may be any type of service to which an access is offered from a particular place, like an airport, a hotel, a bus station, a train station, a state office or a hospital possibly at a desk office.

The tag 12 comprises, as components, at least one integrated circuit or chip 122 and at least one antenna 124 for receiving and transmitting a signal originating from either outside or the chip 122 respectively.

The tag 12 may further comprise a battery for supplying power to the tag components.

The tag 12 is preferably provided with power through a radio-frequency signal to be received from an external entity, as a contact-less reader.

The tag antenna 124 is configured to receive data from and send data to outside, through a short range radiofrequency link 15.

The short range radiofrequency may be fixed at, for example, 13.56 MHz.

The tag chip 122 includes means for storing data, such as one or several nonvolatile memories, and means for processing data, like one or several microprocessors. As data processing type(s), there are notably modulating a signal to be transmitted, through the tag antenna 124, to an external entity(ies) and demodulating a signal to be received, through the tag antenna 124, from an external entity.

According to one interesting feature, the tag chip 122 stores data relating to a form related to a user.

The form incorporates predefined information to be provided by a user, so as to access the concerned service.

The information may include a first name, a last name, a bank account number, and/or other information.

The form may be defined in any format, such as a HyperText Markup Language (or HTML).

As data stored within the tag chip 122, there may be a date and/or a time at which the service is desired to be accessed, a time period during which the user accesses the service, an identifier of an application embedded within the card 18 and to be addressed, a service identifier, an identifier of a service provider, as an addressee of a corresponding completed form and/or other information.

As to the terminal, it may be any device including means for processing data, comprising or being connected to a contact-less antenna 162 for sending to and/or receiving data from outside, through a short range radio-frequency link 15, comprising or being connected to means for interfacing with a user, as Man Machine Interface (or MMI), like a keyboard 164, a loudspeaker (not represented) and/or a display screen 166, and comprising or being connected to means (not represented) for storing data.

For example, the terminal may be, instead of a phone, a Personal Digital Assistant (or PDA), a mobile laptop, a portable TeleVision (or TV), a tablet computer, and/or a netbook.

The phone 16, as user terminal and mobile handset, plays in particular a role of a contact-less reader of the tag 12.

The phone 16 includes at least one battery (not represented), at least one microprocessor (not represented), at least one memory (not represented) and at least one Input/Output (or I/O) interface.

The phone memory stores data, like user data, and at least one application. As application(s), there is preferably at least a Web browser, so as to access, through a Web server embedded within the card 18, at least the target application supported by the card 18 and that allows to exchange data between the tag 12, the card 18 and the server 120.

The phone microprocessor processes data originating from the phone memory.

The phone microprocessor executes preferably the Web browser, as user interface, so as to interact with the application(s) supported by the card 18 and offered to the card user.

The phone 16 is equipped with a contact-less antenna 162 for exchanging data, through the short range radio-frequency link 15, with an external entity(ies) and an NFC chip (not represented) connected to the contact-less antenna 162.

The NFC chip is connected to the phone 16.

The phone 16 is used at least in a reader mode to let communicate, through the NFC chip, the card 18 and the tag 12.

The NFC chip is powered by the phone battery and transmits, through the contact-less antenna 162, a signal, so as to power the tag 12. Thus, the card 18 may perform tasks or operations requested from or through the card 18.

The NFC chip plays a role of a modulator-demodulator (or modem) for the card 18, i.e. a device that:
- demodulates a received analogical carrier signal to decode the encoded digital information that is received, over the contact-less antenna 162, from the tag 12, and preferably
- modulates an analogical carrier signal to encode digital information received from the card 18 to be transmitted, over the contact-less antenna 162, to the tag 12 and preferably the PC 110.

The phone 16, as terminal, may comprise another antenna termed hereinafter network antenna 168 for exchanging data, through a long range radio-frequency link (not represented), with a mobile radio-communication network (not represented).

The mobile radio-communication network may be constituted by a Global Service for Mobiles (or GSM), a Universal Mobile Telecommunications System (or UMTS), a Code Division Multiple Access (or CDMA) and/or a Long Term Evolution (or LTE) type network(s).

The mobile radio-communication network list is not exhaustive but only for exemplifying purposes.

The phone I/O interface includes an interface, so as to exchange data with the card 18. The interface with the card 18 may be an ISO 7816 interface, as a contact interface when the card 18 is lodged within the phone 12.

The phone 16 is connected, through a bi-directional link 17, to the card 18.

The card 18 belongs to a user, namely the terminal user.

The card 18 is a token, i.e. a smart object that is intended to communicate with the outside world.

The token is any electronic medium that may have different form factors.

For example, instead of a Subscriber Identity Module (or SIM) type smart card, the token can be embodied within a Secure Digital (or SD) type card, a Multi-Media type Card (or MMC), a smart dongle of the USB (acronym for "Universal Serial Bus") type, or a chip to be fixed to a user terminal, as host device, possibly in a removable manner.

The card 18 comprises a chip.

The card 18 chip preferably includes at least one microprocessor 182, as data processing means, at least one memory 184, and at least one I/O interface 186 which are internally linked together through a data and control bus 183.

The card 18 includes preferably an ISO 7816 interface, so as to let communicate, through the bi-directional link 17, the card 18 and the phone 16. The communication between the card 18 and the phone 16 is used in particular to benefit from the MMI of the phone 16.

The card user has preferably subscribed to a service(s) managed by the card 18 and related to the target application supported by the card 18, as an intermediary entity for accessing the server 120.

The card microprocessor 182 is able to initiate actions, in order to interact directly with the outside world, in an independent manner of the phone 16. Such a capacity of interaction at the initiative of the card 18 is also known as proactive capacity. The card 18 is thus enable to send, at its own initiative, to the phone 16 a proactive command, also known as "Display text", for displaying, through the phone display screen 166, some message and/or another command for requesting a user input, through the phone 16 MMI.

The card microprocessor 182 preferably executes security functions, in order to protect an access to user information stored and managed through or by the card 18.

The security functions include preferably a user authentication process to be used before accessing user data. To authenticate the user, the card 18 may store an application for verifying a Personal Identity Number (or PIN) stored securely by the card 18 and to be input by the card 18 user, so as to compare with the stored PIN and authorize a running of the target application.

The security functions include preferentially an encryption/decryption process to be used before sending the completed form, so as to protect an access to the data relating to a user and managed by the card 18 and exchanged between the card 18 and the server 120.

Preferably, the card 18 stores securely, within its memory 184, an International Mobile Subscriber Identity (or IMSI), as a unique number associated with all GSM, UMTS, CDMA and/or LTE type network(s) mobile phone users.

The IMSI is used for identifying a subscriber in relation to one or several mobile radio-communication networks.

The card memory 184 may store, for example, a SIM application for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks, and/or an Internet protocol multimedia Services Identity Module (or ISIM) for IP Multimedia Subsystem (or IMS).

The card memory 184 comprises data relating to the concerned user, as user data, and a target application allowing completing, in an automatic manner, a form to be fetched from outside the card chip.

The user data may include a first name, a last name, a bank account number, a birth date, a private key, a PIN, a biometrics print(s) (like a fingerprint(s), a facial print(s) and/or a iris print(s)) and/or other appropriate data.

If there is user information that is not stored within the card memory 184 and requested by the form to be completed, then the application allows requesting, through the phone MMI, the lacking user information from the terminal user.

The user data may be arranged within one or several files. The files may include a file dedicated to storing one form(s) that has been completed thanks to the embedded application.

The last loaded form to be completed may take into account a form(s) that has(have) been previously completed and sent to the server 120 or another server managing a service that has been requested to be accessed from the card user.

The card memory 184 stores a target application algorithm relating to a process, according to the invention, for accessing a service.

The user may access such an application and triggers its execution thanks to a corresponding application identifier that originates from the tag 12 that stores it.

Alternately, the user may access this application and triggers its execution, through and a Sim Application ToolKit (or STK) like menu or a Web server embedded within the card 18 that lists all the applications supported by the card 18.

The application is offered to the card 18 user.

The application allows notably to analyse the fetched form and to recognize requested user data for each data field within the fetched form.

The application also allows to collect stored user data related to each requested user data of the form and to write the retrieved user data into each requested data field of the form.

The application informs automatically the fetched form without soliciting information from the card user.

The application allows storing the thus completed form within the card memory 184.

The application allows sending to an external server 120 the completed form.

Preferably, the application allows transmitting the completed form, through the phone NFC chip, i.e. through a short range radio-frequency link 19, and an NFC enabled PC 110, to the server 120.

Alternatively, the server 120, as second communicating device, is accessible through a mobile communication network (not represented).

The server 120 to be addressed is identified either within the data retrieved from the tag 12 or by data stored within the card memory 184.

The server 120, as addressee of the completed form, may be identified by an Uniform Resource Identifier (or URI), like an Uniform Resource Locator (or URL), as server identifier.

The PC 110, as second communicating device, comprises one microprocessor(s), as means for processing data, means for storing data and one I/O interface(s).

The PC 110 is provided with a display screen 112 and a keyboard 114, as MMI.

The PC 110 is equipped with an NFC chip (not represented) and an NFC antenna 116, so as to read the completed form originating, through the phone NFC chip, from the card 18.

The PC 110 is preferably operated by a person under a control of the service provider.

The PC 110 is connected, through a wire or wireless bi-directional link 111, to the server 120.

The server 120 is hosted by a computer and is dedicated to running an application for managing a database relating to a service and communicating some information of the database to outside.

The database may associate each completed user form with other data relating to the concerned user, like a user account.

The server 120 manages a plurality of user forms and possibly other corresponding user data.

The server 120 may be operated by either a mobile radio-communication network operator or on its behalf, a bank operator and/or a service provider or on its behalf. As service provider, it may also be a company, as a transport operator, that manages a transport service, like a bus, a train, a plane and/or a loyalty service.

The server 120 is arranged to analyze whether each completed form that is received from the card 18 does allow or does not allow the requesting card user to access the managed service.

Rules for accessing the service are stored within a memory 130 that is accessible from the server 120.

The rules for accessing the service may encompass a user profile(s) that is(are) eligible for accessing the service, a predetermined minimum age, a predefined gender and/or other kind of access condition(s).

The rules for accessing the service are taken into account so as to forbid or authorize an access to the concerned service.

Figure 2 depicts an example of a message flow 20 that involves the tag 12, the phone NFC chip 21, the card 18, the NFC enabled PC 110 and the server 120.

In the explained example, the card user desires to access, through the phone 16 MMI, thanks to an application (supported by the card 18) allowing to fetch the form to be informed and to inform it automatically before sending it to the server 120.

It is assumed that the phone display screen 166 displays a list of application(s) offered from and/or through the card 18.

Firstly, the user selects, through the display screen 166 and the keyboard 164 of the phone 16, the target application.

The phone 16 (and more exactly its microprocessor) detects that the selected application is supported by the card 18.

The phone 16 addresses to the card 18 a corresponding request (not represented) for executing the concerned application chosen by the card user.

Optionally, the card 18 checks whether the user is the true user, for example, by verifying that a PIN entered by the user matches the PIN stored within the card 18, in order to authenticate the user before accessing the application managed by the card 18.

The card 18 triggers an execution of the selected application.

The card user carrying the phone 16 approaches the tag 12, so as to power the tag 12 and retrieve a form to be completed that is stored within the tag 12 possibly accompanied with a server identifier, such as a server URI.

The tag 12 sends, via the short-range radio-frequency link 15, to the NFC chip of the phone 16 the form 22 to be completed possibly along with other data, like a service identifier.

The phone NFC chip 21 sends, through the phone microprocessor (not represented) to the card 18 the read form 24 to be completed.

The card 18 (and more exactly its microprocessor) detects each data field of the requested information within the form to be completed.

Once the data fields have been detected, the card 18 recovers, for each data field, within the card memory 184 which stored user information matches the requested information.

The card 18 collects the registered user information, so as to feed the form to be completed into each corresponding data field.

The registered user information may have been informed by the card user before being at the service delivery point.

The card user spares time to complete the digital form allowing to access the service by providing user personal data registered within the card 18, as deposit of the form(s).

The card 18 may use the completed form to either complete another form or send it possibly without any modification to the same server 120 or another server (not represented).

If the card 18 does not write all the requested information items of the form to be completed, then the card 18 involves, through the phone MMI, the card user to further inform each needed lacking information item. To give further information, the card 18 may propose some information item(s) originating from the card memory 184 that is selectable by the card user.

Optionally, once the fetched form has been fully completed, the card 18 prompts, through the phone MMI, the card user to give a confirmation about the thus completed form.

Then, the card 18 sends, through the phone microprocessor (not represented), to the NFC chip 21 a message 26 including a corresponding completed form 26 along with an identifier of the server 120, as addressee of the completed form.

Alternatively, the card 18 sends, through the phone 16 and a mobile radio-communication network(s) connected to this latter, to the identified server the completed form, through one or several messages, such as one or several Short Message Service messages (or SMS), one or several Multimedia Message Service messages) and/or one email(s).

Optionally, prior to a sending of the completed form from the card 18 to the server 120, the card 18 is arranged to sign the completed form. To sign the completed form, the card 18 encrypts the completed form by using an encryption algorithm and an encryption key that are both stored within the card memory 184. The encryption key is preferably related to the card user, as a private key. The server 120 decrypts a corresponding encrypted completed form by using a decryption algorithm and a decryption key that are both stored within the card memory 130. The decryption key is received from the card 18. The decryption key may be a public key that has been generated from the user private key.

Optionally, prior to a sending of the completed form from the card 18 to the server 120, the card 18 encrypts the completed form to be sent. To encrypt the completed form, the card 18 uses an encryption algorithm and an encryption key that are both stored within the card memory 184. And, either the PC 110 or the server 120 decrypts the encrypted completed form by using a key shared between either the PC 110 or the server 120 and the card 18. To decrypt the encrypted completed form, either the PC 110 or the server 120 uses a decryption algorithm and a decryption key that are both stored within either the PC 110 or the server 120.

The NFC chip 21 transmits, via the short-range radio-frequency link 19, to the NFC enabled PC 110 (and more exactly the NFC chip of the PC 110), as contact-less reader, the thus completed form 28 to be forwarded to the server 120.

The PC 110 (and more exactly the PC microprocessor) sends to the server 120 the completed form 210 while requesting to access a service that the server 120 manages. The request may be accompanied with a service identifier.

The server 120 verifies whether the rules for accessing the service is(are) satisfied upon the received completed form.

If the card user information item(s) comprised within the completed form match(es) information item(s) that is(are) compatible with rules for accessing the service to be satisfied, then the server 120 authorizes the card user to access the concerned service.

The server 120 either executes the concerned service or sends to the card 18 a message (not represented) including a key for accessing the concerned service, as service access rights.

As soon as the card 18 receives the key for accessing the service, the card 18 is able to send it to an electronic device (not represented), like a gate, so as to unlock it.

When the server 120 sends to the card 18 such a message, it may be through the NFC enabled PC 110 and the phone NFC chip, or through a mobile radio-communication network and the phone 16.

The server 120 may further inform the card user that she or he is authorized to access the requested service.

The card user benefits thus from the requested service.

Otherwise, i.e. if at least some card user information item(s) comprised within the completed form do(es) not match information item(s) and at least one rule(s) for accessing the service is not satisfied, then the server 120 forbids the card user to access the concerned service. The server 120 informs preferably the card user that she or he is not authorized to access the requested service.

Such a use of the invention system 10 is easy and therefore convenient for the card user and allows her or him to speed access to a requested service.

## Claims

1. A method (20) for accessing a service,
**characterized in that**, a first communicating device (12) storing at least one form to be completed, the method comprises the following steps:
- the first communicating device sends, via a short-range radio-frequency link (15), the form (22) to be completed to a terminal (16);
- the terminal completes at least in part the form to be completed;
- the terminal sends the completed form (26) to a second communicating device (110);
- the second communicating device or another communicating device (120) connected to the second communicating device analyses whether the completed form does or does not allow accessing a service.

2. Method according to claim 1, wherein, prior to a sending of the completed form by the terminal, the terminal signs the completed form by using a key.

3. Method according to claim 1 or 2, wherein, prior to a sending of the completed form by the terminal, the terminal authenticates a terminal user.

4. Method according to any of the claims 1 to 3, wherein, prior to a sending of the completed form by the terminal, the terminal encrypts the completed form to be sent,
and wherein the second communicating device or another communicating device connected to the second communicating device decrypts the encrypted completed form by using a key shared between the second communicating device or another communicating device connected to the second communicating device and the terminal.

5. Method according to any of the claims 1 to 4, wherein, when the second communicating device or another communicating device connected to the second communicating device allows accessing a service, the second communicating device or another communicating device connected to the second communicating device sends to the terminal service access rights.

6. Method according to any of the claims 1 to 5, wherein the terminal stores predetermined data relating to a terminal user.

7. Method according to any of the claims 1 to 6, wherein the terminal stores the completed form.

8. Method according to any of the claims 1 to 7, wherein the first communicating device further stores at least one element of a group comprising:
- a service identifier;
- an addressee identifier.

9. Method according to any of the claims 1 to 8, wherein the first communicating device includes a contact-less communicating device (12) and wherein the terminal includes a Near Field Communication enabled mobile handset (16).

10. A system (10) for accessing a service,
**characterized in that** the system comprises a first communication device (12), a terminal (16) and at least a second communicating device (110),
**in that** the first communicating device comprises means for storing at least one form to be completed, and means for sending, via a short-range radio-frequency link, the form to be completed to a terminal;
**in that** the terminal comprises means for completing at least in part the form to be completed, and means for sending the completed form to a second communicating device;
**in that** the second communicating device or another communicating device (120) connected to the second communicating device comprises means for analysing whether the completed form does or does not allow accessing a service.
